# EUROPEAN PATENT APPLICATION

(11) **EP 1 983 750 A2**
(43) Date of publication of application: **22.10.2008**
(21) Application number: 08006997.4
(22) Date of filing: 08.04.2008
(51) Int. Cl.: H04N 7/14

(54) **Control device, mobile communication system, and communication terminal**

(30) Priority: 16.04.2007 JP 2007107396
(71) Applicant: NTT DoCoMo, Inc., Chiyoda-ku Tokyo 100-6150 (JP)
(72) Inventor: Kano, Izua c/o Intellectual Property Department, Chiyoda-ku Tokyo 100-6150 (JP); Yamada, Eiju c/o Intellectual Property Department, Chiyoda-ku Tokyo 100-6150 (JP); Kamiya, Dai c/o Intellectual Property Department, Chiyoda-ku Tokyo 100-6150 (JP); Yamada, Kazuhiro c/o Intellectual Property Department, Chiyoda-ku Tokyo 100-6150 (JP); Onda, Yasushi c/o Intellectual Property Department, Chiyoda-ku Tokyo 100-6150 (JP); Murakami, Keiichi c/o Intellectual Property Department, Chiyoda-ku Tokyo 100-6150 (JP)
(74) Representative: HOFFMANN EITLE

(57) **Abstract**

A control device comprises a first memory, a second memory, and a processor. The first memory is configured to store captured image data and alternative image data. The second memory is configured to store positional data in association with a communication terminal. The processor is configured to: retrieve from the second memory first positional data associated with a first communication terminal and second positional data associated with a second communication terminal; calculate a distance between a first position indicated by the first positional data and a second position indicated by the second positional data; and select image data to be sent to the first communication terminal from among captured image data or alternative image data, on the basis of the calculated distance, to allow the first communication terminal to display an image on the basis of the selected image data.

## Description

### Cross-Reference to Related Applications

This application is based on and claims priority under 35 USC 119 from Japanese Patent Application No. 2007-107396 filed on April 16, 2007.

### Background

### Technical Field

The present invention relates to a technique for communication in which text or voice messages are exchanged together with images.

### Related Art

In recent years, high-performance mobile phones, by which non-voice communication is possible, have become increasingly common. For example, a mobile phone with a videophone function, by which an image of a face captured by a phonecam can be sent/received together with voice, is widely used. Also, a mobile phone, by which a character image can be displayed on a screen during voice communication, is used (refer to JP-T-2004-537231 and JP-A1-2004-297350). Such mobile phones make communication more intimate and entertaining than voice-only-communication.

However, a mobile phone with a conventional videophone function has a problem that a face of a user is unconditionally exposed to a person with whom the user is not familiar. Also, merely displaying a character image during voice communication does not make a substantial contribution to promotion of communication between users.

The present invention has been made in view of the circumstances, and an object is to promote communication between users while taking privacy of the users into consideration.

### Summary

The present invention provides a control device comprising: a first memory configured to store captured image data and alternative image data; a second memory configured to store positional data in association with identification data of a communication terminal; and a processor configured to: retrieve from the second memory first positional data associated with identification data of a first communication terminal and second positional data associated with identification data of a second communication terminal; calculate a distance between a first position indicated by the first positional data and a second position indicated by the second positional data; select image data to be sent to the first communication terminal from among captured image data or alternative image data, on the basis of the calculated distance; and if captured image data is selected, send captured image data stored in the first memory to the first communication terminal to allow the first communication terminal to display an alternative image on the basis of the alternative image data; and if alternative image data is selected, send alternative image data stored in the first memory to the first communication terminal to allow the first communication terminal to display an alternative image on the basis of the alternative image data.

In the control device, the processor may be configured to: if the calculated distance is above a threshold value, select alternative image data as image data to be sent to the first communication terminal; and if the calculated distance is less than or equal to the threshold value, select captured image data as image data to be sent to the first communication terminal.

The control device may further comprise a third memory configured to store a pair of telephone numbers of communication terminals that have communicated with each other, and the processor may be further configured to search the third memory for a pair of a telephone number of the first communication terminal and a telephone number of the second communication terminal; and if the calculated distance is above a threshold value, and the pair of the telephone number of the first communication terminal and the telephone number of the second communication terminal is found in the third memory, select captured image data as image data to be sent to the first communication terminal.

In the control device, the processor may be configured to: if the calculated distance is above a threshold value, select captured image data as image data to be sent to the first communication terminal; and if the calculated distance is less than or equal to the threshold value, select alternative image data as image data to be sent to the first communication terminal.

The control device may further comprise a third memory configured to store a pair of telephone numbers of communication terminals that have communicated with each other, and the processor may be further configured to search the third memory for a pair of a telephone number of the first communication terminal and a telephone number of the second communication terminal; and if the calculated distance is less than or equal to a threshold value, and the pair of the telephone number of the first communication terminal and the telephone number of the second communication terminal is found in the third memory, select captured image data as image data to be sent to the first communication terminal.

In the control device, the processor may be further configured to: if captured image data is selected as image data to be sent to the first communication terminal, send an instruction to the second communication terminal to send captured image data stored in the second communication terminal to the control device; and if alternative image data is selected as image data to be sent to the first communication terminal, send an instruction to the second communication terminal to send alternative image data stored in the second communication terminal to the control device.

In the control device, the processor may be further configured to: if captured image data is selected as image data to be sent to the first communication terminal, send an instruction to the second communication terminal to send captured image data stored in the second communication terminal to the control device; and if alternative image data is selected as image data to be sent to the first communication terminal, receive identification data of alternative image data from the second communication terminal, and send the identification data to the first communication terminal to allow the first communication terminal to display an alternative image on the basis of alternative image data stored in the first communication terminal and identified by the identification data.

In the control device, the processor may be further configured to, if captured image data is selected as image data to be sent to the first communication terminal, send an instruction to the second communication terminal to send captured image data stored in the second communication terminal to the control device.

In the control device, the first memory may be configured to store captured image data and alternative image data in association with identification data of a communication terminal, and the processor may be configured to, if alternative image data is selected as image data to be sent to the first communication terminal, send alternative image data stored in the first memory in association with identification data of the second communication terminal to the first communication terminal to allow the first communication terminal to display an alternative image on the basis of the alternative image data.

The present invention also provides a mobile communication system comprising: a first device including: a first memory configured to store positional data in association with identification data of a communication terminal; and a processor configured to: retrieve from the first memory first positional data associated with identification data of a first communication terminal and second positional data associated with identification data of a second communication terminal; and calculate a distance between a first position indicated by the first positional data and a second position indicated by the second positional data; and a second device including: a second memory configured to store captured image data and alternative image data; and a processor configured to: select image data to be sent to the first communication terminal from among captured image data or alternative image data, on the basis of the distance calculated by the first device; and if captured image data is selected, send captured image data stored in the second memory to the first communication terminal to allow the first communication terminal to display an alternative image on the basis of the alternative image data; and if alternative image data is selected, send alternative image data stored in the second memory to the first communication terminal to allow the first communication terminal to display an alternative image on the basis of the alternative image data.

The present invention also provides a communication terminal comprising: an image capture unit configured to capture an image to generate captured image data; a memory that stores alternative image data; a communication unit; and a processor configured to: determine whether a distance between a position of the communication terminal and a position of another communication terminal is less than or equal to a predetermined distance; select captured image data generated by the image capture unit or the alternative image data stored in the memory, on the basis of a result of the determination; and send the selected image data via the communication unit.

The present invention also provides a communication terminal comprising: an image capture unit configured to capture an image to generate captured image data; a memory that stores alternative image data; a communication unit; and a processor configured to: determine whether a distance between a position of the communication terminal and a position of another communication terminal is less than or equal to a predetermined distance; select captured image data generated by the image capture unit or the alternative image data stored in the memory, on the basis of a result of the determination; and send data indicating the selected image data via the communication unit.

The communication terminal may further comprise a display, and the memory may store a plurality of pieces of alternative image data, and the processor may be further configured to: receive data indicating alternative image data via the communication unit; and cause the display to display an alternative image on the basis of alternative image data stored in the memory and indicated by the received data.

### [Effects]

According to an aspect of the present invention, it is possible to promote communication between users while taking privacy of the users into consideration.

### Brief Description of the Drawings

Embodiments of the present invention will now be described in detail with reference to the following figures, wherein:
Fig. 1 is a diagram illustrating a configuration of a system according to an embodiment of the present invention;
Fig. 2 is a block diagram illustrating a configuration of a control device;
Fig. 3 is a diagram illustrating an avatar ID conversion table stored in a control device;
Fig. 4 is a diagram illustrating a distance control table stored in a control device;
Fig. 5 is a block diagram illustrating a configuration of a mobile communication terminal;
Fig. 6 is a diagram illustrating operation keys of a mobile communication terminal;
Fig. 7 is a diagram illustrating a logical configuration of units provided in a mobile communication terminal;
Fig. 8A is a diagram illustrating an example of an avatar image, and Fig. 8B is a diagram illustrating an example of a captured image;
Fig. 9 is a flowchart showing an operation carried out by a mobile communication terminal;
Fig. 10 is a diagram illustrating an image displayed on a mobile communication terminal;
Fig. 11 is a diagram illustrating an image displayed on a mobile communication terminal;
Fig. 12 is a sequence chart showing an operation carried out by a mobile communication terminal and a control device;
Fig. 13 is a diagram illustrating an image displayed on a mobile communication terminal;
Fig. 14 is a diagram illustrating an image displayed on a mobile communication terminal;
Fig. 15 is a diagram illustrating an image displayed on a mobile communication terminal;
Fig. 16 is a diagram illustrating an image displayed on a mobile communication terminal;
Fig. 17 is a diagram illustrating an image displayed on a mobile communication terminal; and
Fig. 18 is a diagram illustrating an image displayed on a mobile communication terminal.

### Detailed Description

An embodiment of the present invention will be described with reference to the drawings.

In the following description, voice communication during which an image is transferred is referred to as a "videophone call". An "image" in the definition includes a still image and a moving image. A "captured image" includes an image captured by a camera such as an image of a face captured by a phonecam. An "avatar" is a representation of a user of a communication terminal, that is commonly used in two-way communication such as a chat or a bulletin board on the Internet. An "avatar" may include an image of a part of a user such as a face, and an image of an animal, a robot, or a virtual creature. An "avatar image" is an image representing an avatar.

In the present embodiment, a distance between two communication terminals is calculated, and an image to be displayed on each of the communication terminals is selected from among a captured image and an avatar image depending on the calculated distance. For example, if a distance between two communication terminals is above a threshold value, an avatar image may be selected as an image to be displayed on each of the communication terminals, and if the distance is less than or equal to the threshold value, a captured image may be selected. Conversely, if a distance between two communication terminals is above a threshold value, a captured image may be selected as an image to be displayed on each of the communication terminals, and if the distance is less than or equal to the threshold value, an avatar image may be selected.

### [Configuration]

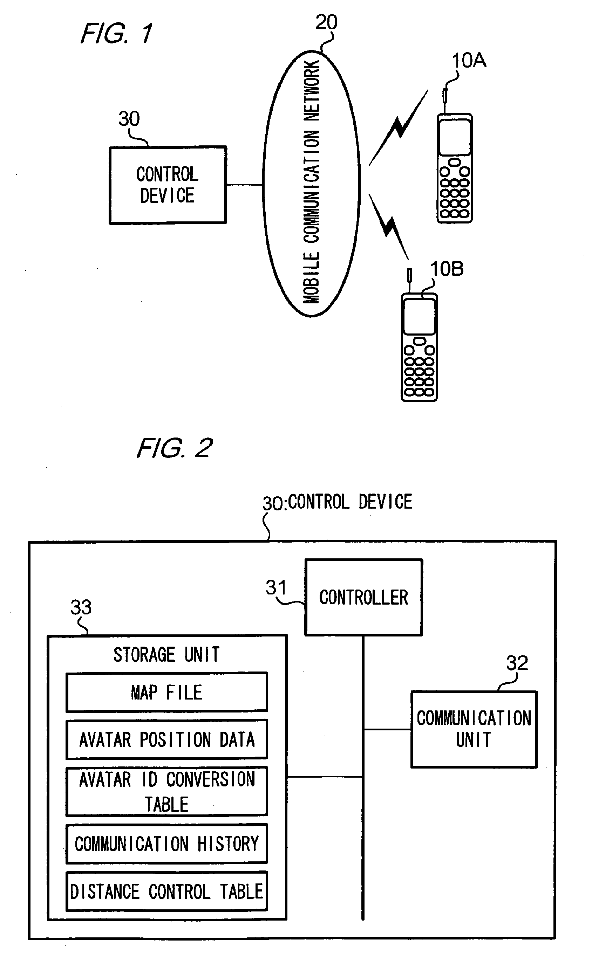

Fig. 1 is a schematic diagram illustrating a configuration of a system according to an embodiment of the present invention. As shown in the drawing, the system includes mobile communication terminals 10A and 10B, mobile communication network 20, and control device 30. Although in the drawing only two mobile communication terminals (source and destination mobile communication terminals) are shown for convenience of the explanation, in reality a lot of mobile communication terminals can exist in the system. It is to be noted that in the following description mobile communication terminal 10A is assumed to be a source mobile communication terminal, and mobile communication terminal 10B is assumed to be a destination mobile communication terminal. It is also to be noted that each of mobile communication terminal 10A and mobile communication terminal 10B is referred to as "mobile communication terminal 10", except where it is necessary to specify otherwise.

Mobile communication network 20 is a network for providing mobile communication terminal 10 with a mobile communication service, and is operated by a carrier. Mobile communication network 20 includes plural nodes such as base stations, switching centers, and a service control station (neither of which is shown), and communication lines (not shown) connecting the plural nodes. Mobile communication network 20 combines and sends voice data, image data, and control data in accordance with a predetermined protocol. For example, 3G-324M standardized by 3GPP (3rd Generation Partnership Project) is preferable as such a protocol. A service control station stores positional data of mobile communication terminals 10, contract data and billing data of mobile communication terminals 10, and telephone numbers of mobile communication terminals 10. Control device 30 is connected to a service control station and switching centers of mobile communication network 20.

Fig. 2 is a block diagram illustrating a configuration of control device 30. As shown in the drawing, control device 30 includes controller 31, storage unit 33, and communication unit 32. Controller 31 includes a CPU (Central Processing Unit), a ROM (Read Only Memory), and a RAM (Random Access Memory). The CPU executes a program stored in the ROM or storage unit 33 while using the RAM as a work area, thereby controlling components of control device 30. Storage unit 33 is, for example, an HDD (Hard Disk Drive). Storage unit 33 stores, in addition to programs to be executed by controller 31, data to be used to enable communication between mobile communication terminals 10. Communication unit 32 is an interface for carrying out communication using mobile communication network 20.

Now, data stored in storage unit 33 will be described.

Storage unit 33 stores a map file, plural pieces of avatar position data, an avatar ID conversion table, a communication history, a distance control table, and other data such as avatar image data that is used when an operation (described later) is carried out.

The map file contains data of a virtual three-dimensional space (hereinafter referred to as "virtual space") consisting of plural pieces of object data, plural pieces of location data, and plural pieces of path data. Object data is data of an object such as a building or a road, that exists in the virtual space. Specifically, object data is polygon data that defines an external appearance of an object such as its shape or color. An object represented by object data is a still object, whose location in the virtual space is fixed, not a moving object like an avatar. Location data is data indicating a location in the virtual space in a two-dimensional or three-dimensional coordinate system. An object represented by object data is associated with location data. Path data is data defining a space that can be used as a path for an avatar in the virtual space. A space defined by path data is, for example, a road.

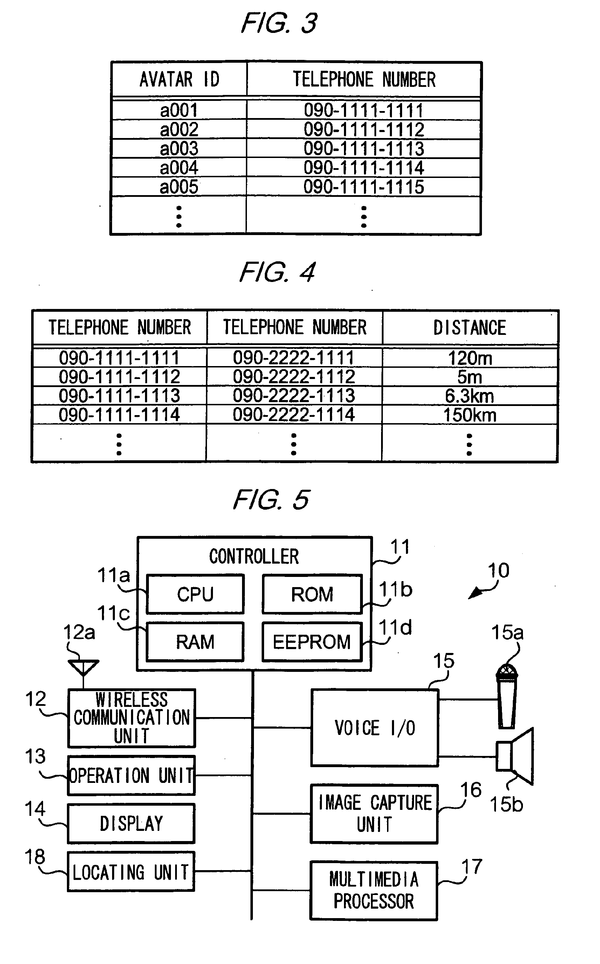

The plural pieces of avatar position data are a collection of pieces of avatar position data that are sent to control device 30 from mobile communication terminal 10. The avatar ID conversion table is, as shown in Fig. 3, a table in which an avatar ID assigned to an avatar is associated with a telephone number of mobile communication terminal 10, a user of which is represented by the avatar. The communication history is a history of communications (exchanges of images or voice messages) between mobile communication terminals 10, and consists of sets of a telephone number of source mobile communication terminal 10, a telephone number of destination mobile communication terminal 10, and a time at which communication was made between the terminals. The distance control table is a table in which telephone numbers of mobile communication terminals 10 which are in communication with each other are associated with a distance between the two terminals. Controller 31 of control device 30 receives positional data from mobile communication terminals 10 which are in communication, and calculates a distance between the two terminals on the basis of the received positional data. Fig. 4 is a diagram illustrating an example of the distance control table. In the figure, for example, it is shown that mobile communication terminal 10 having a telephone number "090-1111-1111" and mobile communication terminal 10 having a telephone number "090-2222-1111" are in communication with each other, and that the distance between the terminals is 120 meters.

Now, mobile communication terminal 10 will be described.

Mobile communication terminal 10 is a mobile phone which is capable of voice and data communication with another mobile communication terminal 10, by use of mobile communication network 20. Mobile communication terminal 10 has a videophone function by which the terminal is able to exchange images or voice messages with another mobile communication terminal and display a received image. Mobile communication terminal 10 is also able to display a virtual space managed by control device 30, control an avatar of a user in the virtual space, and realize communication with a user of another avatar in the virtual space.

Fig. 5 is a block diagram illustrating a configuration of mobile communication terminal 10.

As shown in the drawing, mobile communication terminal 10 includes controller 11, wireless communication unit 12, operation unit 13, display 14, voice I/O 15, image capture unit 16, multimedia processor 17, and locating unit 18. Controller 11 includes CPU 11 a, ROM 11b, RAM 11c, and EEPROM (Electronically Erasable and Programmable ROM) 11d. CPU 11 a executes a program stored in ROM 11b or EEPROM 11d while using RAM 11c as a work area, thereby controlling components of mobile communication terminal 10. Wireless communication unit 12 has antenna 12a, and wirelessly communicates data with mobile communication network 20. Operation unit 13 has keys, and provides controller 11 with an operation signal corresponding to an operation by a user. Display 14 has a liquid crystal panel and a liquid crystal drive circuit, and displays information under the control of controller 11. Voice I/O 15 has microphone 15a and speaker 15b, and inputs or outputs voice signals. Image capture unit 16 has a camera function. Image capture unit 16 has a CMOS (Complementary Metal Oxide Semiconductor) image sensor and a signal processing circuit, and generates image data of a photographed subject.

Multimedia processor 17 has an LSI (Large Scale Integration) for processing data exchanged via wireless communication unit 12, and performs an encoding or decoding process relative to voice signals or image data and a multiplexing or separating process relative to voice signals or image data. Multimedia processor 17 also generates moving image data (hereinafter referred to as "captured image data") on the basis of image data generated by image capture unit 16. A scheme of encoding or decoding voice signals may be AMR (Adaptive Multi-Rate), and a scheme of encoding or decoding image data may be MPEG (Moving Picture Experts Group) -4. Locating unit 18 measures a position of mobile communication terminal 10 on the basis of the differences in reception times of GPS signals sent from plural GPS satellites. Locating unit 18 periodically measures a position of mobile communication terminal 10 while the terminal is in communication, and a measured position is notified to control device 30 via wireless communication unit 12 under control of controller 11.

Now, keys of operation unit 13 will be described with reference to Fig. 4.

As shown in the drawing, operation unit 13 has function key Bs, cursor move keys Bu, Bd, Bl, and Br, confirmation key Bf, and numeric keys B 1 to B0. Function key Bs is a key to which a function is allotted depending on a screen displayed on display 14. A function allotted to function key Bs may be a function for selecting a destination of a communication, which is described in detail later. Cursor move keys Bu, Bd, Bl, and Br are keys for moving an object such as an avatar or a pointer from front to back (or up and down) and from side to side. Confirmation key Bf is a key for selecting an object displayed on display 14 or confirming a selected object. Numeric keys B1 to B0 are keys for inputting characters and figures.

Now, data stored in mobile communication terminal 10 will be described.

ROM 11b pre-stores some programs (hereinafter referred to as "preinstalled programs"). The preinstalled programs are specifically a multitasking operating system (hereinafter referred to as "multitasking OS"), a Java (Registered Trademark) platform, and native application programs. The multitasking OS is an operating system supporting functions such as allocation of virtual memory spaces, which are necessary to realize a pseudo-parallel execution of plural tasks using a TSS (Time-Sharing System). The Java platform is a bundle of programs that are described in accordance with a CDC (Connected Device Configuration) which is a configuration for providing Java execution environment 114 (described later) in a mobile device with a multitasking OS. Native application programs are programs for providing mobile communication terminal 10 with basic functions such as voice and data communication or shooting with a camera.

EEPROM 11d has a Java application program storage area for storing Java application programs. A Java application program consists of: a JAR (Java ARchive) file including a main program that are instructions executed under Java execution environment 114, and image files and audio files used when the main program is running; and an ADF (Application Descriptor File) in which information on installation and execution of the main program and attribute information of the main program are described. A Java application program is created and stored in a server on the Internet or mobile communication network 20 by a content provider or a carrier, and in response to a request from mobile communication terminal 10, sent to mobile communication terminal 10 from the server.

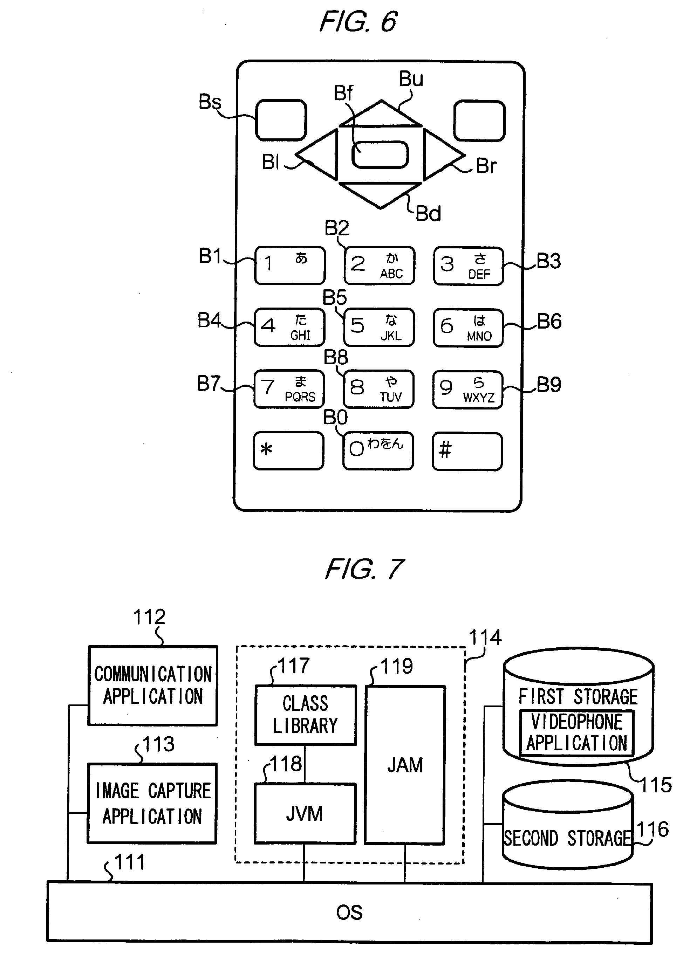

Fig. 7 is a diagram illustrating a logical configuration of units provided in mobile communication terminal 10 through execution of programs stored in ROM 11b and EEPROM 11d. As shown in the drawing, in mobile communication terminal 10, communication application 112, image capture application 113, and Java execution environment 114 are provided on OS 111. In EEPROM 11d, first storage 115 and second storage 116 are secured. Communication application 112 and image capture application 113 are provided by execution of native application programs stored in ROM 11b, and communication application 112 establishes communication with mobile communication network 20 and image capture application 113 captures an image using image capture unit 16.

Java execution environment 114 is provided through execution of Java platform stored in ROM 11b. Java execution environment 114 includes class library 117, JVM (Java Virtual Machine) 118, and JAM (Java Application Manager) 119. Class library 117 is a collection of program modules (classes) that provide a particular function. JVM 118 provides a Java execution environment optimized for a CDC, and provides a function of interpreting and executing bytecode provided as a Java application program. JAM 119 provides a function of managing download, installation, execution, or termination of a Java application program.

First storage 115 is a storage for storing Java application programs (JAR files and ADFs) downloaded under the control of JAM 119. Second storage 116 is a storage for storing data that is generated during execution of a Java application program, after the program is terminated. A storage area of second storage 116 is assigned to each of installed Java application programs. Data of a storage area assigned to a Java application program can be rewritten during execution of the program, and cannot be rewritten during execution of another Java application program.

Java application programs that can be stored in mobile communication terminal 10 include an application program used for displaying a virtual space in which an avatar moves around and performing voice and data communication with another mobile communication terminal 10. The application program is hereinafter referred to as "videophone application program". A videophone application program is pre-stored in mobile communication terminal 10. EEPROM 11d stores avatar image data representing an image of an avatar, which is used during execution of a videophone application program.

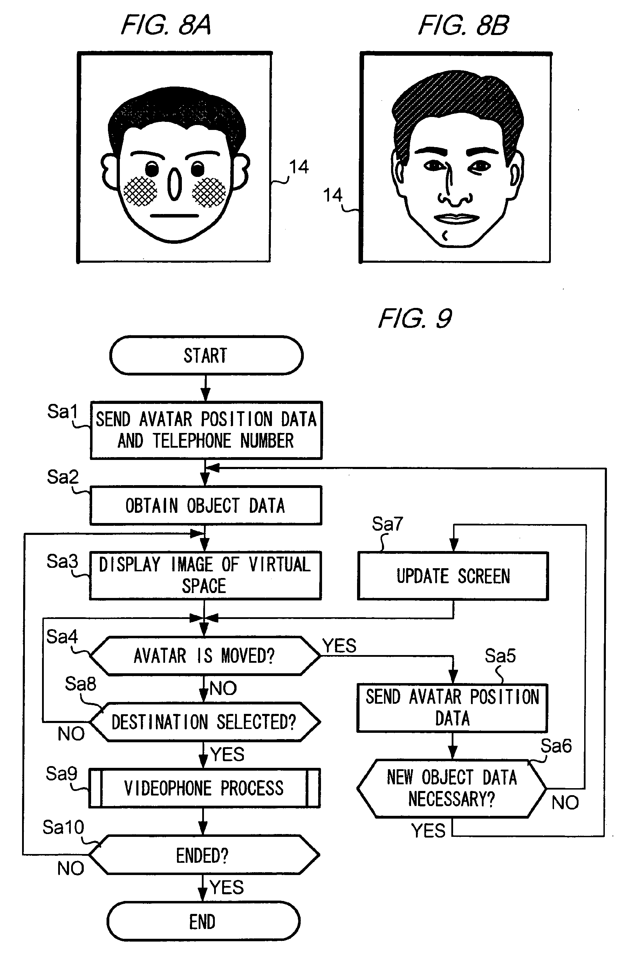

When a videophone call is made using avatar image data, controller 11 retrieves avatar image data from EEPROM 11d and sends it to mobile communication network 20 together with a voice message input to voice I/O 15. Mobile communication network 20 transfers the avatar image data and the voice message to destination mobile communication terminal 10. On receipt of the avatar image and the voice message via wireless communication unit 12, controller 11 causes display 14 to display an avatar image on the basis of the avatar image data, and causes voice I/O 15 to output the voice message. Fig. 8A is a diagram illustrating an avatar image displayed on display 14 of destination mobile communication terminal 10 on the basis of avatar image data.

On the other hand, when a videophone call is made using captured image data, controller 11 retrieves captured image data generated by image capture unit 16 and sends it to mobile communication network 20 together with a voice message input to voice I/O 15. Mobile communication network 20 transfers the captured image data and the voice message to destination mobile communication terminal 10. On receipt of the captured image and the voice message via wireless communication unit 12, controller 11 causes display 14 to display a captured image on the basis of the captured image data, and causes voice I/O 15 to output the voice message. Fig. 8B is a diagram illustrating a face of a user of mobile communication terminal 10 captured by image capture unit 16, that is displayed on display 14 of destination mobile communication terminal 10.

### [Operation]

Operations of mobile communication terminal 10 and control device 30 in a mobile communication system will be described. Specifically, first, an operation of mobile communication terminal 10 running a videophone application program will be described, and second, operations of mobile communication terminals 10A and 10B and control device 30, that are performed when voice communication is made between mobile communication terminals 10A and 10B, will be described.

Fig. 9 is a flowchart showing an operation of mobile communication terminal 10A running a videophone application program. When a videophone application program is executed in response to a predetermined operation by a user, controller 11 of mobile communication terminal 10A sends data of a position in a virtual space and data of a telephone number of mobile communication terminal 10A to control device 30 (step Sa1). Avatar position data may be freely determined, and may be, for example, a predetermined position or a position in which an avatar was positioned when a videophone application program was previously terminated.

On receipt of the position data sent from mobile communication terminal 10A, controller 31 of control device 30 identifies object data on the basis of the position data and a map file stored in storage unit 33. Specifically, controller 31 identifies object data of an object located within a predetermined range from a position indicated by the position data. After object data is identified, controller 31 sends the object data and location data of an object represented by the object data to mobile communication terminal 10A. Simultaneously, if an avatar of another user exists in the predetermined range, controller 31 also sends data relevant to the avatar including image data of the avatar, an avatar ID assigned to the avatar, and position data of the avatar. On receipt of the object data and the avatar-relevant data sent from control device 30 (step Sa2), controller 11 of mobile communication terminal 10A causes display 14 to display an image of a virtual space on the pieces of data (step Sa3).

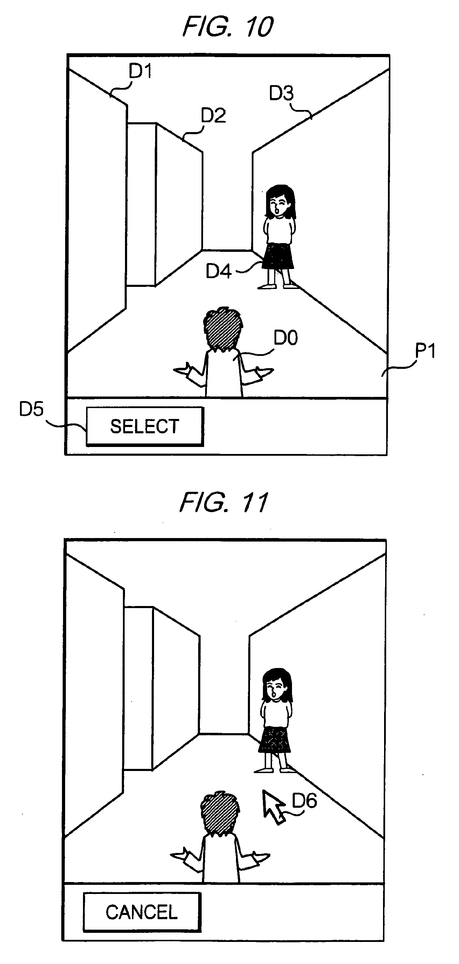

Fig. 10 is a diagram illustrating an example of the image displayed on display 14. In the drawing, image D0 shows an avatar of a user of mobile communication terminal 10A, that moves around the virtual space under control of the user. Images D1, D2, and D3 show buildings, and a space between the buildings is a road. Image D4 shows an avatar of a user of mobile communication terminal 10B, that moves around the virtual space under control of the user. Image D5 shows a function allotted to function key Bs.

After an image of a virtual space is displayed, if a user presses cursor move key Bu, Bd, Bl, or Br, controller 11 causes display 14 to display an image of an avatar moving in the virtual space. For example, if a user presses cursor move key Bu when a screen shown by Fig. 10 is displayed, controller 11 causes display 14 to display an image of an avatar moving ahead in the virtual space. Alternatively, if a user presses function key Bs in the same situation, controller 11 causes display 14 to display a pointer so that the user can select an avatar of another user with whom the user wishes to communicate. If a user presses function key Bs when a pointer is displayed, controller 11 causes display 14 to hide the pointer, and awaits an instruction to move an avatar of the user.

Fig. 11 is a diagram illustrating an image in which a pointer is displayed on display 14. In the drawing, image D6 of an arrow shows a pointer. If a user presses cursor move key Bu, Bd, Bl, or Br when a pointer is displayed as shown in the drawing, controller 11 causes display 14 to display images of the pointer moving. Cursor move keys Bu, Bd, Bl, and Br, if a pointer is not displayed, function as operation keys for moving an avatar, and if a pointer is displayed, function as operation keys for moving the pointer. If a user presses confirmation key Bf when a pointer is on an avatar image of another user, controller 11 sends a request to control device 30 to communicate with a mobile communication terminal of the other user by videophone.

Now, returning to explanation of Fig. 9, after an image of a virtual space is displayed at step Sa3, controller 11 determines whether it has received an instruction from a user to move an avatar (step Sa4). Specifically, controller 11 determines whether it has received an operation signal indicating that cursor move key Bu, Bd, Bl, or Br has been pressed. Controller 11 repeats the determination, and if receiving an instruction from a user to move an avatar (step Sa4: YES), sends position data of the avatar indicating a position to which the avatar is moved, to control device 30 (step Sa5), and determines whether it is necessary to obtain new object data (step Sa6). If it is not necessary to obtain new object data (step Sa6: NO), controller 11 updates the current screen of display 14 to show the avatar that moved (step Sa7), and again carries out an operation of step Sa4. If it is necessary to obtain new object data (step Sa6: YES), controller 11 again obtains object data corresponding to the position data from control device 30 (step Sa2). Controller 11 repeats the operation of steps Sa2 to Sa6 while an avatar is moved by a user.

On the other hand, if controller 11 does not receive an instruction from a user to move an avatar (step Sa4: NO), the controller determines whether it has received an instruction from a user to select a communication destination (step Sa8). Specifically, controller 11 determines whether it has received an operation signal indicating that confirmation key Bf had been pressed while a pointer was on an avatar image of another user. If the determination is negative (step Sa8: NO), controller 11 again makes a judgment of step Sa4, and if the determination is affirmative (step Sa8: YES), controller 11 carries out an operation for initiating a videophone call (step Sa9). The operation is hereinafter referred to as "videophone operation" and is described in detail later. After that, controller 11 determines whether it has received an instruction from a user to terminate a videophone call (step Sa10), and if the determination is affirmative (step Sa10: YES), controller 11 terminates execution of a videophone application program, and if the determination is negative (step Sa10: NO), controller 11 again causes display 14 to display an image of the virtual space (step Sa3).

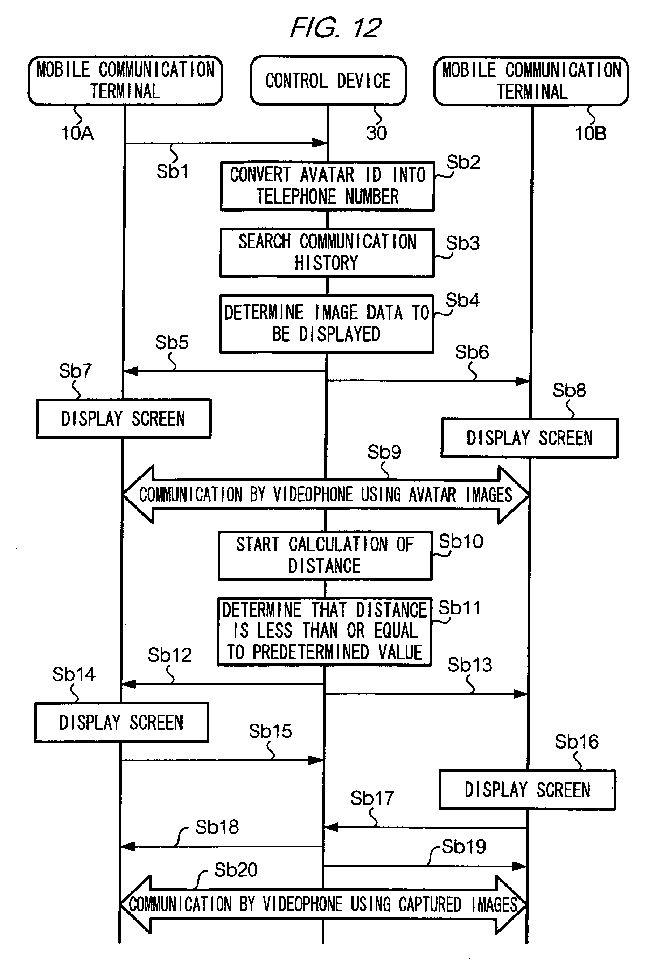

Now, a videophone operation of step Sa9 will be described. The operation will be described along with an operation of control device 30 and an operation of mobile communication terminal 10B with which mobile communication terminal 10A communicates, with reference to Fig. 12. Fig. 12 is a sequence chart of operations of mobile communication terminals 10A and 10B and control device 30.

Controller 11 of mobile communication terminal 10A sends a request to control device 30 to make a videophone call (step Sb1). The request includes a telephone number of mobile communication terminal 10A and an avatar ID of an avatar that has been selected, by use of pointer D6, as a destination for communication. On receipt of the request via communication unit 32, controller 31 of control device 30 converts the avatar ID included in the request into a telephone number (hereinafter, the telephone number is assumed to be a telephone number of mobile communication terminal 10B) using an avatar ID conversion table stored in storage unit 33 (step Sb2). After that, controller 31 searches a communication history stored in storage unit 33 for a pair of the telephone number of mobile communication terminal 10A and the telephone number of mobile communication terminal 10B (step Sb3).

Subsequently, controller 31 determines image data to be displayed on mobile communication terminals 10A and 10B during a videophone call, on the basis of the result of the search at step Sb3 (step Sb4). If the pair of the telephone number of mobile communication terminal 10A and the telephone number of mobile communication terminal 10B are found in the communication history, controller 31 determines to use captured image data of mobile communication terminals 10A and 10B as image data to be displayed on mobile communication terminals 10A and 10B during a videophone call. The determination is based on an assumption that for a pair of users who have communicated with each other it would not matter if a captured image of one party is exposed to the other party. On the other hand, if the pair of the telephone number of mobile communication terminal 10A and the telephone number of mobile communication terminal 10B are not found in the communication history, controller 31 makes a determination to use avatar image data of mobile communication terminals 10A and 10B as image data to be displayed on mobile communication terminals 10A and 10B during a videophone call.

After the determination at step Sb4 is made, controller 31 sends data to mobile communication terminal 10A, indicating image data to be sent to control device 30 (step Sb5). Here, if it is assumed that the pair of the telephone number of mobile communication terminal 10A and the telephone number of mobile communication terminal 10B are not found in the communication history, controller 31 sends an instruction to mobile communication terminal 10A to send avatar image data to control device 30. Controller 31 also instructs nodes of mobile communication network 20 such as a service control station to sends a call signal to mobile communication terminal 10B (step Sb6). The call signal includes data indicating that the signal is for communication by videophone using avatar image data, and also includes avatar image data representing a user of mobile communication terminal 10A.

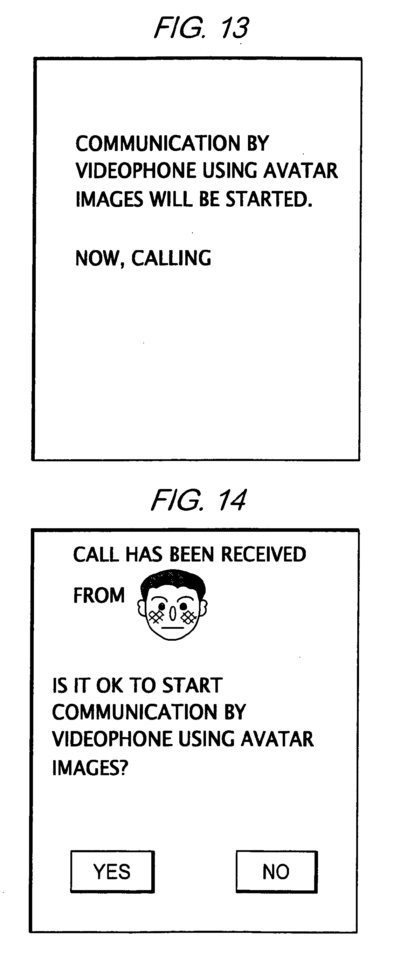

On receipt of the instruction from control device 30 to send avatar image data, controller 11 of mobile communication terminal 10A causes display 14 to display a screen shown in Fig. 13 (step Sb7). The screen displays a message stating that mobile communication terminal 10A is now calling mobile communication terminal 10B to start communication by videophone using avatar images. On the other hand, controller 11 of mobile communication terminal 10B that receives a call causes display 14 to display a screen shown in Fig. 14 (step Sb8). The screen shows an avatar image of a user of a calling side and a message asking whether it is OK to start communication by videophone using an avatar image. If a user selects a "YES" button on the screen, controller 11 of mobile communication terminal 10B sends a call-accepted signal to mobile communication network 20. Consequently, communication between mobile communication terminals 10A and 10B is established (step Sb9).

After communication is established, voice messages and avatar image data are exchanged between mobile communication terminals 10A and 10B. Specifically, controller 11 of one mobile communication terminal 10 retrieves avatar image data from EEPROM 11d, and sends it to mobile communication network 20 together with a voice message input into voice I/O 15. Mobile communication network 20 transfers the avatar image data and the voice message to the other mobile communication terminal 10. On receipt of the avatar image data and the voice data via wireless communication unit 12, controller 11 of the other mobile communication terminal 10 causes display 14 to display an avatar image on the basis of the avatar image data, and causes voice I/O 15 to output the voice message.

After communication is established, controller 21 of control device 30 starts calculation of a distance between mobile communication terminals 10A and 10B (step Sb10). Specifically, controller 31 periodically receives positional data from each of mobile communication terminals 10A and 10B, calculates a distance between a position indicated by positional data received from mobile communication terminal 10A and a position indicated by positional data received from mobile communication terminal 10B, and adds data on the calculated distance to a distance control table stored in storage unit 33.

Please note that if a user selects a "NO" button on the screen displayed at step Sb8, controller 11 of mobile communication terminal 10B sends a call-not-accepted signal to mobile communication network 20. Accordingly, communication between mobile communication terminals 10A and 10B is not established.

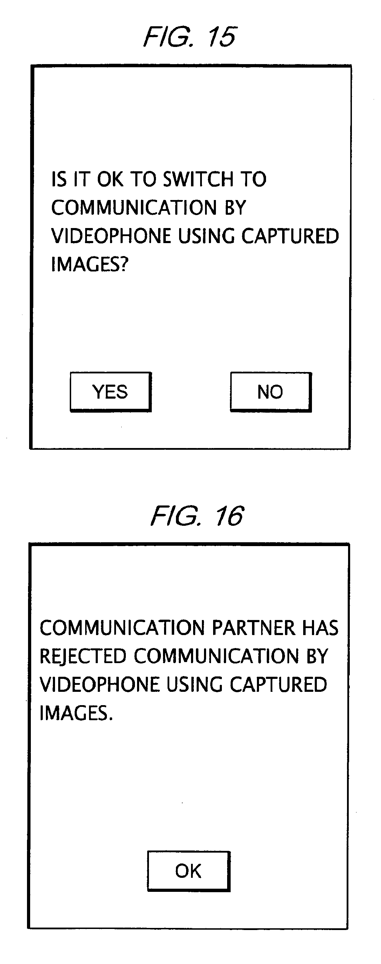

During communication by videophone, controller 31 of control device 30, if it is determined that a distance indicated by distance data in a distance control table is less than or equal to a predetermined distance (e.g., 50 meters) (step Sb11), sends an inquiry to mobile communication terminals 10A and 10B asking whether it is OK to switch the current communication by videophone using avatar images to communication by videophone using captured images (steps Sb12 and Sb13). On receipt of the inquiry, controller 11 of mobile communication terminal 10A causes display 14 to display a screen as shown in Fig. 15 (step Sb14). The screen shows a message asking whether it is OK to start communication by videophone using captured images. If a user selects a "YES" button on the screen, controller 11 of mobile communication terminal 10A sends a response to mobile communication network 20 that mobile communication terminal 10A will start communication by videophone using captured images (step Sb15).

Similarly, controller 11 of mobile communication terminal 10B causes display 14 to display a screen as shown in Fig. 15 (step Sb16), and if a user selects a "YES" button on the screen, sends a response to mobile communication network 20 that mobile communication terminal 10B will start communication by videophone using captured images (step Sb17). On receipt of an affirmative response from mobile communication terminals 10A and 10B, controller 31 of control device 30 sends an instruction to mobile communication terminals 10A and 10B to switch communication by videophone using avatar images to communication by videophone using captured images (steps Sb18 and Sb19). After the instruction is received by mobile communication terminals 10A and 10B, communication by videophone using captured images as shown in Fig. 8B is started between the two terminals (step Sb20). Specifically, controller 11 of one mobile communication terminal 10 retrieves captured image data generated by image capture unit 16, and sends it to mobile communication network 20 together with a voice message input into voice I/O 15. Mobile communication network 20 transfers the captured image data and the voice message to the other mobile communication terminal 10. On receipt of the avatar image data and the voice data via wireless communication unit 12, controller 11 of the other mobile communication terminal 10 causes display 14 to display a captured image on the basis of the captured image data, and causes voice I/O 15 to output the voice message.

It should be noted that if a user selects a "NO" button on the screen displayed at step Sb14 or Sb16, controller 11 of one mobile communication terminal 10 sends a response to mobile communication network 20 stating that the terminal will not start communication by videophone using captured images. Mobile communication network 20 notifies the content of the response to the other mobile communication terminal 10, and controller 11 of the other mobile communication terminal 10, in response to the notice, causes display 14 to display a screen as shown in Fig. 16.

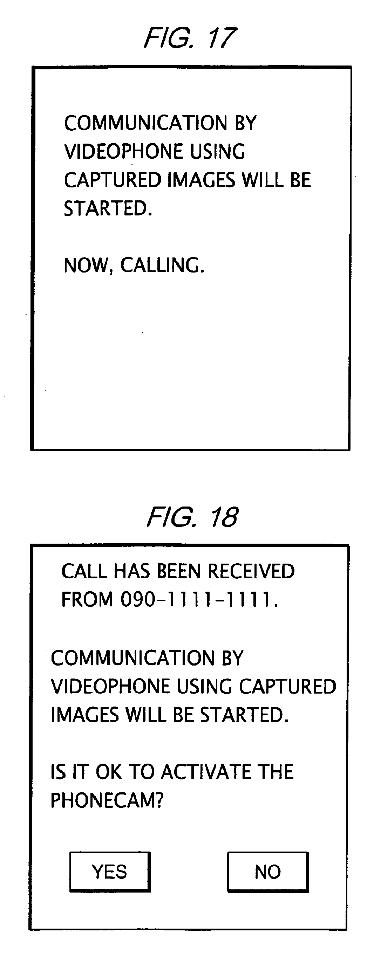

If at step Sb3, the pair of the telephone number of mobile communication terminal 10A and the telephone number of mobile communication terminal 10B is found in the communication history, controller 31 of control device 30 sends an instruction to mobile communication terminal 10A to send captured image data to control device 30. Controller 31 also instructs nodes of mobile communication network 20 such as a service control station to send a call signal to mobile communication terminal 10B. The call signal includes data indicating that the signal is for communication by videophone using captured image data. On receipt of the instruction from control device 30 to send captured image data, controller 11 of mobile communication terminal 10A causes display 14 to display a screen as shown in Fig. 17 (step Sb7). The screen shows a message stating that mobile communication terminal 10A is now calling mobile communication terminal 10B to start communication by videophone using captured images.

On the other hand, controller 11 of mobile communication terminal 10B that receives a call causes display 14 to display a screen as shown in Fig. 18 (step Sb8). The screen shows the telephone number of mobile communication terminal 10A and a message asking whether it is OK to start communication by videophone using a captured image. If a user selects a "YES" button on the screen, controller 11 of mobile communication terminal 10B sends a call-accepted signal to mobile communication network 20. Consequently, communication between mobile communication terminals 10A and 10B is established.

After communication is established, voice messages and captured image data are exchanged between mobile communication terminals 10A and 10B.

As described above, in the mobile communication system according to the present embodiment, a user of mobile communication terminal 10 is able to move around a virtual space using an avatar, and make a videophone call to a person that the user met in the virtual space. In addition, a user of mobile communication terminal 10 is able to make a videophone call to a person, if the user does not know a telephone number of the person. Also, only an avatar ID is provided to another mobile communication terminal 10, and a telephone number is not provided to another mobile communication terminal 10. Accordingly, videophone communication can be promoted.

Also, in the mobile communication system according to the present embodiment, a user of mobile communication terminal 10 may communicate by videophone using avatar images at first, and after getting close to the communication partner, may communicate by videophone using captured images. Accordingly, reluctance to take part in a videophone call is reduced.

Also, in the mobile communication system according to the present embodiment, before communication by videophone using avatar images is switched to communication by videophone using captured images, approval by a user is required. Accordingly, it is avoided that a captured image of a user of mobile communication terminal 10 is unexpectedly exposed to another user.

### [Modifications]

The above embodiment may be modified as described below. Please note that the following modifications may be employed in combination.

### (1) Modification 1

In the above embodiment, where if a distance between two mobile communication terminals 10 is above a predetermined distance, an avatar image is displayed, and if the distance is less than or equal to the predetermined distance, a captured image is displayed, an image to be displayed may be replaced with another. Namely, if the distance is above the predetermined distance, a captured image may be displayed, and if the distance is less than or equal to the predetermined distance, an avatar image may be displayed.

### (2) Modification 2

In the above embodiment, wherein a position of mobile communication terminal 10 is identified using GPS technology, a position of mobile communication terminal 10 may be identified on the basis of a location registration area or a cell in which the terminal is located. A location registration area is an areal unit in which a switching center performs general calling, and a cell is an areal unit in which a base station is able to wirelessly communicate. If a location registration area is used to identify a position of mobile communication terminal 10, since location registration areas are recorded in a service control station, controller 31 of control device 30 may obtain a location registration area of mobile communication terminal 10 from the service control station.

Alternatively, a position of mobile communication terminal 10 may be identified on the basis of a position of a wireless reader/writer provided in mobile communication network 20. In this case, plural wireless reader/writers are dispersedly arranged in mobile communication network 20, and mobile communication terminal 10 is provided with a function of wirelessly communicating with the wireless reader/writers. Mobile communication terminal 10 obtains positional data of a wireless reader/writer from the wireless reader/writer, and uses the positional data as positional data of mobile communication terminal 10.

### (3) Modification 3

In the above embodiment, where an avatar image is switched to a captured image during a videophone call depending on a distance between mobile communication terminals 10 in the real world, an avatar image may be switched to a captured image during a videophone call depending on a distance between avatars in a virtual space. A distance between avatars in a virtual space may be calculated by controller 31 of control device 30 on the basis of avatar position data stored in storage unit 33. Alternatively, a distance between avatars in a virtual space may be calculated by controller 11 of mobile communication terminal 10 on the basis of avatar position data obtained by the terminal from control device 30 by use of avatar IDs. It should be noted that a position of an avatar in a virtual space can be referred to as "a position associated with mobile communication terminal 10" because an avatar represents a user of mobile communication terminal 10. Similarly, a position of mobile communication terminal 10 in the real world can be referred to as "a position associated with mobile communication terminal 10".

### (4) Modification 4

In the above embodiment, where if a pair of a telephone number of source mobile communication terminal 10 and a telephone number of destination mobile communication terminal 10 is found in a communication history, communication by videophone is started using captured image data, communication by videophone may be started using captured image data regardless of whether a pair of telephone numbers is found in a communication history.

### (5) Modification 5

In the above embodiment, where an image to be displayed during a videophone call is selected in source mobile communication terminal 10, an image may be selected in control device 30. Specifically, source mobile communication terminal 10 may send both avatar image data and captured image data to control device 30, and control device 30 may select and send one of the two pieces of image data to destination mobile communication terminal 10. When selecting image data, control device 30 may do so based on an elapsed time for communication. Alternatively, control device 30 may send both avatar image data and captured image data to destination mobile communication terminal 10, and designate image data to be used in destination mobile communication terminal 10. Destination mobile communication terminal 10 uses the designated image data from among received pieces of image data.

### (6) Modification 6

In the above embodiment, where mobile communication terminal 10 stores avatar image data, control device 30 may pre-store avatar image data. Specifically, control device 30 may always instruct source mobile communication terminal 10 to send captured image data to control device 30, and select image data to be sent to destination mobile communication terminal 10 from among the received captured image data and the avatar image data stored in control device 30. To realize the modification, control device 30 needs to have avatar image data in storage unit 33 and have a multimedia processor that mobile communication terminal 10 has. When sending avatar image data to destination mobile communication terminal 10, controller 31 of control device 30, on receiving voice data and captured image data which have been combined, separates the combined data into individual data. After that, controller 31 replaces the captured image data with the avatar image data stored in storage unit 33, and sends it to source mobile communication terminal 10 in combination with the received voice data.

Alternatively, control device 30 may store pieces of avatar image data and receive avatar ID data for identifying avatar image data from mobile communication terminal 10. According to the present modification, it is possible to reduce the amount of data transmitted from source mobile communication terminal 10 to control device 30. To realize the modification, control device 30 needs to store avatar image data in storage unit 33 in association with avatar ID data. When sending avatar image data to destination mobile communication terminal 10, controller 31 of control device 30 instructs source mobile communication terminal 10 to send avatar ID data to control device 30, and sends avatar image data identified by received avatar ID data to destination mobile communication terminal 10. When sending captured image data to destination mobile communication terminal 10, controller 31 of control device 30 instructs source mobile communication terminal 10 to send captured image data to control device 30, and sends received captured image data to destination mobile communication terminal 10. It is to be noted that control device 30 may store avatar image data in association with a telephone number of mobile communication terminal 10, and send avatar image data identified by a telephone number received from source mobile communication terminal 10, to destination mobile communication terminal 10.

Alternatively, destination mobile communication terminal 10 may store pieces of avatar image data representing a user of source mobile communication terminal 10. Destination mobile communication terminal 10 may store avatar image data in association with avatar ID data. In this case, when causing destination mobile communication terminal 10 to display an avatar image, control device 30 instructs source mobile communication terminal 10 to send avatar ID data to control device 30, and transfers received avatar ID data to destination mobile communication terminal 10. Destination mobile communication terminal 10 displays an avatar image on the basis of avatar image data identified by the avatar ID data. When causing destination mobile communication terminal 10 to display a captured image, control device 30 instructs source mobile communication terminal 10 to send captured image data to control device 30, and transfers received captured image data to destination mobile communication terminal 10.

### (7) Modification 7

In the above embodiment, where control device 30 calculates a distance, mobile communication terminal 10 may calculate a distance. Alternatively, mobile communication terminal 10 may be provided with a short range wireless communication unit compatible with, for example, Bluetooth, and, instead of calculating a distance, determine that a distance between the terminal and another mobile communication terminal 10 is less than or equal to a predetermined distance on the basis of a fact that the terminal has communicated with another mobile communication terminal 10 with a short range wireless communication unit.

In a case where a distance is calculated, mobile communication terminal 10 selects image data to be sent to destination mobile communication terminal 10 from among captured image data or avatar image data on the basis of a calculated distance. Avatar image data may be stored in any of source mobile communication terminal 10, control device 30, and destination mobile communication terminal 10.

In a case where avatar image data is stored in source mobile communication terminal 10, the terminal includes: an image capture unit configured to capture an image to generate captured image data; a memory that stores alternative image data such as avatar image data; a communication unit; and a processor configured to: determine whether a distance between a position of the communication terminal and a position of another communication terminal is less than or equal to a predetermined distance; select captured image data generated by the image capture unit or the alternative image data stored in the memory, on the basis of a result of the determination; and send the selected image data via the communication unit.

In a case where avatar image data is stored in control device 30, controller 11 of mobile communication terminal 10 sends data indicating avatar image data to control device 30 via wireless communication unit 12, and control device 30 sends avatar image data indicated by the data to destination mobile communication terminal 10. In this case, source mobile communication terminal 10 includes: an image capture unit configured to capture an image to generate captured image data; a memory that stores alternative image data such as avatar image data; a communication unit; and a processor configured to: determine whether a distance between a position of the communication terminal and a position of another communication terminal is less than or equal to a predetermined distance; select captured image data generated by the image capture unit or the alternative image data stored in the memory, on the basis of a result of the determination; and send data indicating the selected image data via the communication unit.

In a case where avatar image data is stored in destination mobile communication terminal 10, and control device 30 sends data indicating avatar image data to destination mobile communication terminal 10, the destination terminal displays an avatar image on the basis of avatar image data indicated by the data. In this case, source mobile communication terminal 10 has the same configuration as that of source mobile communication terminal 10 in a case where avatar image data is stored in control device 30. Destination mobile communication terminal 10 includes: a display; a communication unit; a memory that stores a plurality of pieces of alternative image data such as avatar image data; and a processor configured to: receive data indicating alternative image data via the communication unit; and causes the display to display an alternative image on the basis of alternative image data stored in the memory and indicated by the received data.

### (8) Modification 8

In the above embodiment, where users of mobile communication terminals 10 communicate with each other by videophone, namely using voice and images, users may use text instead of voice to chat. The number of mobile communication terminals 10 that communicate with each other at once may be equal to or more than three.

### (9) Modification 9

In the above embodiment, where both mobile communication terminal 10A and mobile communication terminal 10B are instructed to switch communication by videophone using avatar images to communication by videophone using captured images, only one of the terminals may be instructed to switch communication by videophone using avatar images to communication by videophone using captured images.

### (10) Modification 10

In the above embodiment, an avatar image may be not an image of an avatar, but an image of another object.

### (11) Modification 11

In the above embodiment, where control device 30 receives an approval from mobile communication terminal 10 before switching communication by videophone using avatar images to communication by videophone using captured images, control device 30 may, without receiving an approval from mobile communication terminal 10, switch communication by videophone using avatar images to communication by videophone using captured images after a condition is satisfied.

### (12) Modification 12

In the above embodiment, where a user of mobile communication terminal 10 starts communication by videophone by selecting an avatar shown in a virtual space with a pointer, a user may obtain a user ID or a telephone number of destination mobile communication terminal 10, and make a videophone call using the obtained user ID or telephone number.

### (13) Modification 13

In the above, embodiment, where mobile communication terminal 10 is a mobile phone, mobile communication terminal 10 may be another communication terminal such as a PDA (Personal Digital Assistance) or a personal computer. Also, a communication network used by mobile communication terminal 10 may be, instead of a mobile communication network, another network such as the Internet. Also, an image capture unit, a microphone, and a speaker of mobile communication terminal 10 may be not built-in, but external.

### (14) Modification 14

In the step Sa1 of the above embodiment, where mobile communication terminal 10A sends data of a telephone number of the terminal to control device 30, mobile communication terminal 10A may send other data on the basis of which a telephone number of the terminal is identified to control device 30. In this case, the data may be used for control device 30 to obtain a telephone number from a service control station.

### (15) Modification 15

In the above embodiment, functions of control device 30 may be distributed to plural devices. For example, a mobile communication system may include: a first device including: a first memory configured to store positional data in association with identification data of a communication terminal; and a processor configured to: retrieve from the first memory first positional data associated with identification data of a first communication terminal and second positional data associated with identification data of a second communication terminal; and calculate a distance between a first position indicated by the first positional data and a second position indicated by the second positional data; and a second device including: a second memory configured to store captured image data and alternative image data such as avatar image data; and a processor configured to: select image data to be sent to the first communication terminal from among captured image data or alternative image data, on the basis of the distance calculated by the first device; and if captured image data is selected, send captured image data stored in the second memory to the first communication terminal to allow the first communication terminal to display an alternative image on the basis of the alternative image data; and if alternative image data is selected, send alternative image data stored in the second memory to the first communication terminal to allow the first communication terminal to display an alternative image on the basis of the alternative image data.

### (16) Modification 16

In the above embodiment, functions of control device 30 may be served by another node in mobile communication network 20 such as a service control station or a switching center.

### (17) Modification 17

A program executed in control device 30 in the above embodiment may be provided via a recording medium or a network such as the Internet.

## Claims

1. A control device comprising:
a first memory configured to store captured image data and alternative image data;
a second memory configured to store positional data in association with identification data of a communication terminal; and
a processor configured to:
retrieve from the second memory first positional data associated with identification data of a first communication terminal and second positional data associated with identification data of a second communication terminal;
calculate a distance between a first position indicated by the first positional data and a second position indicated by the second positional data;
select image data to be sent to the first communication terminal from among captured image data or alternative image data, on the basis of the calculated distance; and
if captured image data is selected, send captured image data stored in the first memory to the first communication terminal to allow the first communication terminal to display an alternative image on the basis of the alternative image data; and
if alternative image data is selected, send alternative image data stored in the first memory to the first communication terminal to allow the first communication terminal to display an alternative image on the basis of the alternative image data.

2. The control device according to Claim 1, wherein the processor is configured to:
if the calculated distance is above a threshold value, select alternative image data as image data to be sent to the first communication terminal; and
if the calculated distance is less than or equal to the threshold value, select captured image data as image data to be sent to the first communication terminal.

3. The control device according to Claim 1, further comprising a third memory configured to store a pair of telephone numbers of communication terminals that have communicated with each other, wherein:
the processor is further configured to search the third memory for a pair of a telephone number of the first communication terminal and a telephone number of the second communication terminal; and
if the calculated distance is above a threshold value, and the pair of the telephone number of the first communication terminal and the telephone number of the second communication terminal is found in the third memory, select captured image data as image data to be sent to the first communication terminal.

4. The control device according to Claim 1, wherein the processor is configured to:
if the calculated distance is above a threshold value, select captured image data as image data to be sent to the first communication terminal; and
if the calculated distance is less than or equal to the threshold value, select alternative image data as image data to be sent to the first communication terminal.

5. The control device according to Claim 1, further comprising a third memory configured to store a pair of telephone numbers of communication terminals that have communicated with each other, wherein:
the processor is further configured to search the third memory for a pair of a telephone number of the first communication terminal and a telephone number of the second communication terminal; and
if the calculated distance is less than or equal to a threshold value, and the pair of the telephone number of the first communication terminal and the telephone number of the second communication terminal is found in the third memory, select captured image data as image data to be sent to the first communication terminal.

6. The control device according to Claim 1, wherein the processor is further configured to:
if captured image data is selected as image data to be sent to the first communication terminal, send an instruction to the second communication terminal to send captured image data stored in the second communication terminal to the control device; and
if alternative image data is selected as image data to be sent to the first communication terminal, send an instruction to the second communication terminal to send alternative image data stored in the second communication terminal to the control device.

7. The control device according to Claim 1, wherein the processor is further configured to:
if captured image data is selected as image data to be sent to the first communication terminal, send an instruction to the second communication terminal to send captured image data stored in the second communication terminal to the control device; and
if alternative image data is selected as image data to be sent to the first communication terminal, receive identification data of alternative image data from the second communication terminal, and send the identification data to the first communication terminal to allow the first communication terminal to display an alternative image on the basis of alternative image data stored in the first communication terminal and identified by the identification data.

8. The control device according to Claim 1, wherein the processor is further configured to, if captured image data is selected as image data to be sent to the first communication terminal, send an instruction to the second communication terminal to send captured image data stored in the second communication terminal to the control device.

9. The control device according to Claim 1, wherein:
the first memory is configured to store captured image data and alternative image data in association with identification data of a communication terminal; and
the processor is configured to, if alternative image data is selected as image data to be sent to the first communication terminal, send alternative image data stored in the first memory in association with identification data of the second communication terminal to the first communication terminal to allow the first communication terminal to display an alternative image on the basis of the alternative image data.

10. A mobile communication system comprising:
a first device including:
a first memory configured to store positional data in association with identification data of a communication terminal; and
a processor configured to:
retrieve from the first memory first positional data associated with identification data of a first communication terminal and second positional data associated with identification data of a second communication terminal; and
calculate a distance between a first position indicated by the first positional data and a second position indicated by the second positional data; and
a second device including:
a second memory configured to store captured image data and alternative image data; and
a processor configured to:
select image data to be sent to the first communication terminal from among captured image data or alternative image data, on the basis of the distance calculated by the first device; and
if captured image data is selected, send captured image data stored in the second memory to the first communication terminal to allow the first communication terminal to display an alternative image on the basis of the alternative image data; and
if alternative image data is selected, send alternative image data stored in the second memory to the first communication terminal to allow the first communication terminal to display an alternative image on the basis of the alternative image data.

11. A communication terminal comprising:
an image capture unit configured to capture an image to generate captured image data;
a memory that stores alternative image data;
a communication unit; and
a processor configured to:
determine whether a distance between a position of the communication terminal and a position of another communication terminal is less than or equal to a predetermined distance;
select captured image data generated by the image capture unit or the alternative image data stored in the memory, on the basis of a result of the determination; and
send the selected image data via the communication unit.

12. A communication terminal comprising:
an image capture unit configured to capture an image to generate captured image data;
a memory that stores alternative image data;
a communication unit; and
a processor configured to:
determine whether a distance between a position of the communication terminal and a position of another communication terminal is less than or equal to a predetermined distance;
select captured image data generated by the image capture unit or the alternative image data stored in the memory, on the basis of a result of the determination; and
send data indicating the selected image data via the communication unit.

13. The communication terminal according to Claim 12, further comprising a display wherein:
the memory stores a plurality of pieces of alternative image data; and
the processor is further configured to:
receive data indicating alternative image data via the communication unit; and
cause the display to display an alternative image on the basis of alternative image data stored in the memory and indicated by the received data.
